# EUROPEAN PATENT APPLICATION

(11) **EP 1 352 767 A1**
(43) Date of publication of application: **15.10.2003**
(21) Application number: 02076730.7
(22) Date of filing: 09.04.2002
(51) Int. Cl.: B60J 7/04, B21D 26/02

(54) **Reinforced panel-shaped closure means for vehicles**

(71) Applicant: Inalfa Industries B.V., 5804 AB Venray (NL)
(72) Inventor: Grolle, Paul Robert, 5708 AB Helmond (NL)
(74) Representative: Voncken, Bartholomeus Maria Christiaan

(57) **Abstract**

The invention relates to panel-shaped closure means (1) for a roof opening of an open roof construction for a vehicle, which closure means (1) in the vicinity of at least one of its edges (3,4) is provided with a reinforcing member (5,6). At least one reinforcing member (5,6) is a hydro-formed member. Preferably, each hydro-formed member is shaped as a tubular member.

## Description

The invention relates to a panel-shaped closure means for a roof opening of an open roof construction for a vehicle, which closure means in the vicinity of at least one of its edges is provided with a reinforcing member.

A panel-shaped closure means of this type is movable for opening and closing a roof opening defined in the roof of a vehicle. The at least one reinforcing member is provided for increasing the strength of the panel-shaped closure means, especially its resistance against bending. However, because in an open roof construction for a vehicle the available space for accommodating the panel-shaped closure means, both in the opened and closed position thereof, is limited, such a reinforcing member should have limited dimensions. Known reinforcing members comprise pressed reinforcements, which are encapsulated into, or bonded to the panel-shaped closure means.

It is an object of the present invention to provide an improved panel-shaped closure means of the type referred to above.

Thus, according to the invention a panel-shaped closure means for a roof opening of an open roof construction for a vehicle is provided, which closure means in the vicinity of at least one of its edges is provided with a reinforcing member, wherein at least one reinforcing member is a hydro-formed member.

During hydro-forming generally a (possibly preformed) hollow work piece is positioned in a composite mould and inflated by liquid pressure. The work piece then adopts the internal shape of the composite mould. Optionally, axially acting pressure members may engage the open ends of the work piece during the inflation process, thus providing additional means for determining the final shape (such as the wall thickness) of the work piece. This specific embodiment of the hydro forming process is also referred to as hydro mechanical forming. One of the advantages of hydro forming or hydro mechanical forming is the high degree of accuracy obtainable. Further, by properly controlling relevant process parameters, members can be obtained having complicated shapes. Thus, in the present case, the hydro-formed member defining the reinforcing member provided on the panel-shaped closure means may be optimised for combining an optimal bending resistance with an optimal (i.e. less bulky) shape. The hydro-forming technique allows to adapt the reinforcing member in an optimal manner to its intended use and location.

In the preferred embodiment of the panel-shaped closure means according to the invention the hydro-formed member is a tubular member. Such a tubular member offers an excellent bending stiffness.

In this aspect it is possible to provide the tubular member with a flattened cross-section with a major cross-sectional dimension in parallel to the plane of the closure means and a minor cross-sectional dimension perpendicularly thereto. In such a way the most critical dimension (in view of available space in the open roof construction of the vehicle) perpendicularly to the panel-shaped closure means can be limited.

One of the advantages of applying a hydro-formed member is that, in a further embodiment, it is possible to provide a reinforcing member having a lengthwise varying cross-section. In such a way, the local bending stiffness of the reinforcing member may be optimised in view of the expected local bending moment in the panel-shaped closure means. With state-of-the-art production techniques such as extruding, obtaining a lengthwise varying cross-section is not possible or very complicated.

In still a further embodiment of the panel-shaped closure means according to the invention, wherein the closure means has a forward edge and a rear edge extending transversally to the vehicle, reinforcing members are provided at, or near these forward and rear edges. Although, in such a case, both reinforcing members could be shaped identically, it is also possible that the reinforcing members at, or near the forward and rear edges of the closure means are differently shaped, taken into account different loads on the respective forward and rear edges of the closure means during use of the open roof construction.

The panel-shaped closure means may have many shapes; for example, the closure means may comprise a glass panel.

A hydro-formed reinforcing member according to the invention may be attached to the closure means in any appropriate way; preferably, the hydro-formed reinforcement member is bonded to the closure means.

The use of hydro-formed reinforcing members allows the realisation of a high form accuracy and form repeatability during the production stage of the hydro-formed member, and thus a high positioning accuracy during the assembly of the hydro-formed member with the panel-shaped closure means. Further, a large array of different and complicated shapes of hydro-formed members is possible. As a consequence, the shape of the hydro-formed member may be optimised firstly in view of loads acting on the panel-shaped closure means, especially bending moments, and secondly in view of the available space.

The invention will be elucidated referring to the drawing, in which an embodiment of a panel-shaped closure means according to the invention is illustrated.
Figure 1 shows, in a perspective view, an embodiment of a panel-shaped closure means according to the invention, and
figure 2 shows, on an enlarged scale, a cross-sectional view according to II-II in fig. 1.

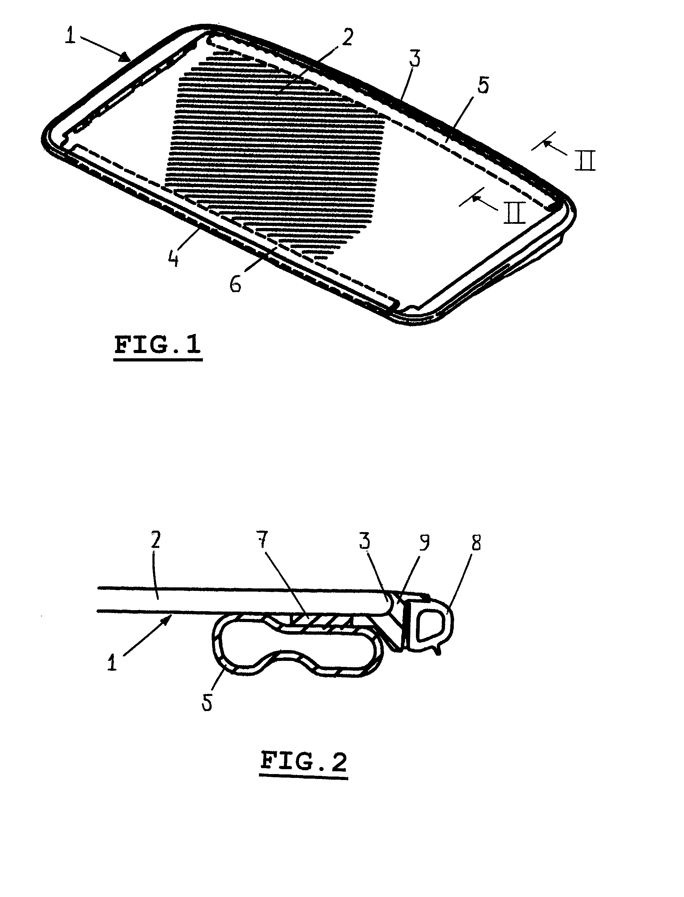

In figure 1 a panel-shaped closure means 1 for a roof opening of an open roof construction for a vehicle is illustrated. Generally, an open roof construction for a vehicle is provided with a roof opening in a stationary part of the roof of the vehicle. Said roof opening can be opened and closed by panel-shaped closure means, e.g. as represented in fig. 1. In the illustrated embodiment the closure means 1 mainly comprises a glass panel 2. It is to be understood, however, that also other materials, or combinations of materials, could be applied.

The closure means 1 has a forward edge 3 and a rear edge 4, both extending transversally to the vehicle (not shown). In the vicinity of the forward edge 3 a reinforcing member 5 is provided, whereas likewise in the vicinity of the rear edge 4 a reinforcing member 6 is provided. Both reinforcing members 5 and 6 extend substantially along the entire length of the respective edges 3 and 4.

It is to be understood, that the panel-shaped closure means 1 further can be provided with other constructional means, which, however, are not relevant for understanding the present invention and, thus, will not be mentioned in detail here.

Now, reference is made to fig. 2. This figure, illustrating a cross-sectional view according to II-II in fig. 1, shows the part of the glass panel 2 in the vicinity of the forward edge 3 of the closure means 1. As illustrated, the reinforcing member 5 is attached to the lower side of the glass panel 2 of the closure means 1. Attaching the reinforcing member occurs by any appropriate attachment means 7, for example a bonding agent.

Moreover, fig. 2 shows a seal 8 attached to the forward edge 3 of the closure means 1 by means of an appropriate attachment means 9. The seal 8 co-operates with the fixed roof (not shown) of the vehicle.

The reinforcing members 5 and 6 are hydro-formed members. In this specific embodiment, those reinforcing member 5 and 6 are tubular members. As shown in fig. 2, these tubular members have a flattened cross-section with a major cross-sectional dimension in parallel to the plane of the closure means 1 and a minor cross-sectional dimension perpendicularly thereto.

Possibly, the reinforcing members 5 and 6 has a lengthwise varying cross-section. For example, the cross-section at their centres may differ from the cross-section near to their ends. Moreover, it is not necessary that the reinforcing members 5 and 6 at the forward edge 3 and rear edge 4, respectively, have the same shape.

The invention is not limited to the embodiment described before, which may be varied widely within the scope of the invention as defined by the claims. Thus, hydro-formed reinforcement members according to the invention may be provided at, or near any of the other edges of the closure means 1 too.

## Claims

1. Panel-shaped closure means for a roof opening of an open roof construction for a vehicle, which closure means in the vicinity of at least one of its edges is provided with a reinforcing member, **characterised in that** at least one reinforcing member is a hydro-formed member.

2. Panel-shaped closure means according to claim 1, wherein the hydro-formed member is a tubular member.

3. Panel-shaped closure means according to claim 2, wherein the tubular member has a flattened cross-section with a major cross-sectional dimension in parallel to the plane of the closure means and a minor cross-sectional dimension perpendicularly thereto.

4. Panel-shaped closure means according to any of the preceding claims, wherein the reinforcing member has a lengthwise varying cross-section.

5. Panel-shaped closure means according to any of the preceding claims, wherein the closure means has a forward edge and a rear edge extending transversally to the vehicle and wherein reinforcing members are provided at, or near these forward and rear edges.

6. Panel-shaped closure means according to claim 5, wherein the reinforcing members at, or near the forward and rear edges of the closure means are differently shaped.

7. Panel-shaped closure means according to any of the preceding claims, wherein the closure means comprises a glass panel.

8. Panel-shaped closure means according to any of the preceding claims, wherein the hydro-formed reinforcement member is bonded to the closure means.
